(19) Europäisches Patentamt / European Patent Office / Office européen des brevets

(11) **EP 1 261 404 B1**

(12) **EUROPÄISCHE PATENTSCHRIFT**

(45) Veröffentlichungstag und Bekanntmachung des Hinweises auf die Patenterteilung:
**28.12.2011   Patentblatt 2011/52**

(21) Anmeldenummer: **01911602.9**

(22) Anmeldetag: **06.02.2001**

(51) Int Cl.:
***B01D 3/00*** *(2006.01)*       ***B01J 19/32*** *(2006.01)*

(86) Internationale Anmeldenummer:
**PCT/EP2001/001250**

(87) Internationale Veröffentlichungsnummer:
**WO 2001/066213 (13.09.2001 Gazette 2001/37)**

(54) **Verfahren zum Betreiben eines Flüssigkeitsverteilers**

Method for operating a liquid distributor

Procédé pour opérer un distributeur de liquides

(84) Benannte Vertragsstaaten:
**AT BE CH CY DE DK ES FI FR GB GR IE IT LI LU MC NL PT SE TR**

(30) Priorität: **08.03.2000   DE 10010810**

(43) Veröffentlichungstag der Anmeldung:
**04.12.2002   Patentblatt 2002/49**

(73) Patentinhaber: **JULIUS MONTZ GmbH**
**D-40723 Hilden (DE)**

(72) Erfinder:
• **ZICH, Egon**
  **42799 Leichlingen (DE)**
• **JANSEN, Helmut**
  **41542 Dormagen (DE)**
• **RIETFORT, Thomas**
  **46236 Bottrop (DE)**

• **KAIBEL, Björn**
  **40723 Hilden (DE)**

(74) Vertreter: **Cohausz, Helge B.**
  **Cohausz Hannig Borkowski Wißgott**
  **Patentanwaltskanzlei GbR**
  **Schumannstrasse 97-99**
  **40237 Düsseldorf (DE)**

(56) Entgegenhaltungen:
**EP-A- 1 016 457      EP-A1- 0 858 830**
**DE-A- 19 524 928     DE-A1- 19 706 544**
**US-A- 2 271 671      US-A- 4 002 705**
**US-A- 4 333 894**

• **KLAUS SATTLER: "Thermische Trennverfahren", 1995, VCH, WEINHEIM, DEUTSCHLAND * pages 232-241 ***

**Beschreibung**

Die Erfindung betrifft ein Verfahren zur Flüssigkeitsverteilung mit Packungs- und/oder Füllkörperkolonnen, die einzeln horizontale, am Wärme- und/oder Stoffaustausch beteiligte Packungsschichten aufweisen.

Bei Destillationen, Absorptionen, Gaswäschen und ähnlichen verfahrenstechnischen Operationen werden Kolonnen eingesetzt, die Einbauten für den Wärme- und Stoffaustausch zwischen Flüssigkeit und Gas enthalten. Diese Einbauten bestehen entweder aus Böden, wie beispielsweise Glockenböden, Tunnelböden, Dualflowböden, Siebböden oder Ventilböden, aus regellos angeordneten Füllkörpern, wie beispielsweise Raschigringen, Pallringen oder Sattelkörpern, oder aus geordneten Packungen. Bei den geordneten Packungen haben sich Geometrien in Kreuzkanalstruktur in der technischen Anwendung breit durchgesetzt. Marktübliche Bauformen sind beispielsweise die Bauarten Montz A3, BSH und B1 der Fa. Montz GmbH, D-40705 Hilden, die Bauarten Sulzer BX, CY und Mellapak der Fa. Sulzer Chemtech AG, CH-8404 Winterthur, die Bauart FLEXIPAC der Fa. Koch-Glitsch, Wichita, Kansas 67208 (USA) und die Bauart Intalox der Fa. Norton, Akron, Ohio 44309 (USA).

Bei Füllkörper- und Packungskolonnen besteht die Notwendigkeit, eine über den Kolonnenquerschnitt möglichst gleichmäßige Verteilung von Flüssigkeit und Gas einzustellen, um eine hohe Trennleistung zu erzielen. Die Gleichverteilung des Gases ist einfach zu realisieren, da der unvermeidliche Druckverlust der Füllkörper und Packungen von selbst eine weitgehende Gleichverteilung der Gasströmung über den Kolonnenquerschnitt bewirkt, die für die meisten technischen Anwendungen ausreichend ist.

Auch bei Festbettreaktoren stellt sich das Problem der gleichmäßigen Verteilung von Flüssigkeit über den Reaktorquerschnitt, um das Auftreten von lokalen Überhitzungen, sogenannten Hot-Spots, zu vermeiden. Es erweist sich daher als vorteilhaft, Verteilvorrichtungen für die Flüssigkeit zu verwenden.

Die Gleichverteilung von Flüssigkeit über den Kolonnenquerschnitt ist nur schwierig zu erreichen. Es werden spezielle Verteiler für die Flüssigkeit benötigt. In der Technik sind eine Vielzahl von Verteilerkonstruktionen gebräuchlich, die nach dem Prinzip des Anstauens von Flüssigkeit, des freien Überlaufs oder der Verdüsung arbeiten. In K. Sattler: "Thermische Trennverfahren" (1988), VCH Verlagsgesellschaft mbH, D-69451 Weinheim findet sich auf den Seiten 226 bis 231 eine Übersicht über technisch gebräuchliche Verteilerkonstruktionen.

Als einfachste Form von Flüssigkeitsverteilern finden sich Randabweiser, wie sie in US 3.099.697 beschrieben sind, die Flüssigkeit von der Kolonnenwand ableiten und in einigem Abstand von der Kolonnenwand wieder aufgeben. Eine Vergleichmäßigung der Flüssigkeitsberieselungsdichte im übrigen Bereich des Kolonnenquerschnitts wird nicht bewirkt.

Teilweise werden Düsen eingesetzt, mit denen die Flüssigkeit über den Kolonnenquerschnitt verteilt wird. Die dabei erzielbare Verteilgüte ist jedoch begrenzt, so daß dieses Verteilerprinzip nur bei einfachen Anwendungen, wie zum Beispiel Absorptionen oder Gaswäschen, zu finden ist.

Verbreiteter sind Verteiler, bei denen die zu verteilende Flüssigkeit aus nach oben offenen Behältnissen, meist verzweigten Kanälen, die sich über den Kolonnenquerschnitt erstrecken, über Überlaufvorrichtungen abläuft. Diese Überlaufvorrichtungen bestehen beispielsweise aus gezackten Wehren und müssen exakt horizontal ausgerichtet werden, um über den Kolonnenquerschnitt eine gleichmäßige Flüssigkeitsverteilung sicherzustellen. Ebenso können Rohre mit unten angebrachten Öffnungen in einem über den Querschnitt verteilten Röhrensystem die zu verteilende Flüssigkeit aufgeben. Auch hier müssen die Rohre möglichst exakt horizontal ausgerichtet sein.

Da diese genaue horizontale Ausrichtung in der Praxis nur schwer mit der erforderlichen Genauigkeit zu realisieren ist, setzt man bei Anwendungen mit hoher Anforderungen an die Verteilgüte Verteilersysteme, die nach dem Anstauprinzip arbeiten, ein. Hier läuft die Flüssigkeit aus den Kanälen nicht über Überlaufwehre ab, sondern über enge Öffnungen im unteren Bereich der Kanäle. Da im Betriebszustand die Flüssigkeitsanstauhöhe in der Regel etwa 0,05 bis 0,15 m beträgt, wirken sich Ungenauigkeiten bei der horizontalen Ausrichtung der Verteilervorrichtung nicht so stark aus wie bei Verteilersystemen, die nach dem Überlaufprinzip arbeiten. Der Herstellaufwand ist jedoch beträchtlich höher. Beispiele für diese Bauform sind EP 374 443 B1, EP 462 048 B1, EP 462 049 B1, EP 434 510 B1, DE 19 615 645 A1, US 4.476.069, US 5.501.079, US 5.192.465, und US 5.518.667.

Bei sehr hohen Anforderungen an die Verteilgüte werden Sonderkonstruktionen eingesetzt, die zusätzlich zu der Anstauung von Flüssigkeit noch die kapillare Verteilwirkung nutzen. Beispiele sind in EP 512 277 B1 und US 4.432.913 beschrieben.

Ein anderes Prinzip zur Erzielung einer hohen Verteilgüte sieht die zeitlich intermittierende Beaufschlagung einzelner Verteilpunkte für die Flüssigkeit vor. Ein Beispiel findet sich in US 4.776.989.

In US 4.569.364 ist ein Verteiler beschrieben, der von außen gezielt verstellt werden kann.

US 5.776.316 beschreibt eine Sammel- und Verteilvorrichtung, die es zusätzlich ermöglicht, Flüssigkeit gezielt über den Kolonnenquerschnitt quer auszutauschen.

In US 5.387.377 ist eine konstruktiv aufwendige Vorrichtung beschrieben, bei der versucht wird, die Verteilvorrichtung zusätzlich auch als Stoffaustauschelement zu nutzen. Die Teile der Vorrichtung, die von Gas durchströmt werden, enthalten Packungen, die den Stoffaustausch unterstützen und auf die übrigen Stoffaustauschelemente im Gasdurchsatz abgestimmt sind.

Eine ähnliche Wirkung wird in US 5.695.548 angestrebt. Hier wird eine Gesamtheit von Verteilkanälen, die in mehreren Lagen übereinander angeordnet sind, im Gleichstrom von Gas und Flüssigkeit durchströmt. Dies verbessert den Stoffaustausch.

Verteiler müssen in Füllkörper- und Packungskolonnen am Kopf der Kolonne zur Verteilung der Rücklaufflüssigkeit sowie an allen Einspeisestellen von flüssigen Zuläufen vorgesehen werden. Zusätzlich ist es bei größeren Trennstufenzahlen der Kolonnen üblich, Zwischenverteilungen für die Flüssigkeit vorzunehmen. Diese Zwischenverteilungen unterdrücken die nachteiligen Effekte von Maldistributionen der Flüssigkeit, wie Randgängigkeiten oder Bachbildungen.

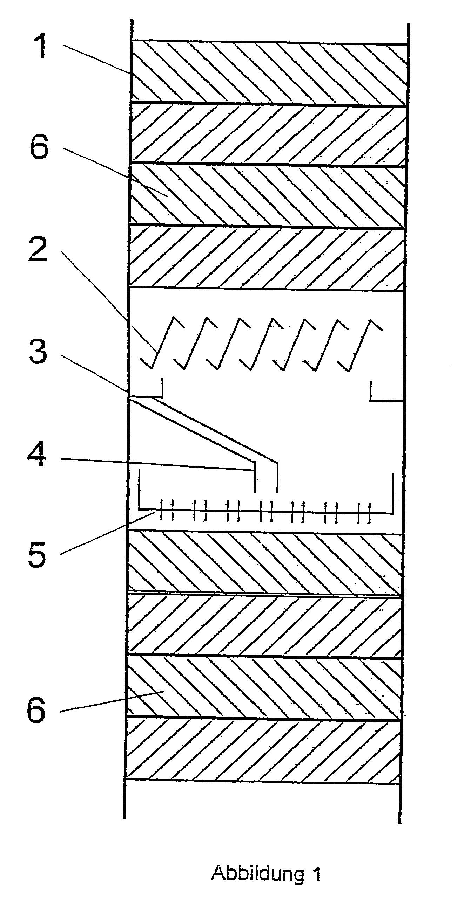

Die Notwendigkeit von Flüssigkeitsverteilern stellt eine erhebliche wirtschaftliche Beeinträchtigung bei der Anwendung von Füllkörper- und Packungskolonnen dar. Speziell die Wiederverteilung von Flüssigkeit in der Kolonne 1 ist aufwendig, da die aus den Stoffaustauschpackungen 6 ablaufende und wiederzuverteilende Flüssigkeit zunächst in einem Flüssigkeitssammler 2 gesammelt, über eine Sammelrinne 3 und ein Ableitrohr 4 geführt und dem Flüssigkeitsverteiler 5 zugeleitet wird (Abb. 1). Die Mindestbauhöhe für die Gesamtanordnung von Sammler, Sammelrinne, Ableitrohr und Verteiler liegt auch bei kleinen Kolonnendurchmessern bei etwa 1 m, bei großen Kolonnendurchmessern normalerweise bei 1,5 bis etwa 2 m. Da in einer Kolonne mehrere dieser Vorrichtungen benötigt werden, führt dies zu um etwa 25% vergrößerten Kolonnenhöhen und höheren Investitionskosten.

Bei Flüssigkeitsgemischen mit Phasenzerfall in der flüssigen Phase kommt erschwerend hinzu, daß die üblichen Verteilerkonstruktionen die Gleichverteilung der beiden flüssigen Phasen über den Kolonnenquerschnitt nur schwer sicherstellen können. Man ist bei Phasenzerfall daher meist gezwungen, beide Flüssigkeiten in einem Phasentreringefäß zunächst zu trennen und anschließend über zwei separate Verteilersysteme zu leiten.

Aufgabe der Erfindung ist es, auf konstruktiv einfache Weise insbesondere ohne zusätzliche Wiederverteilerstation und bei geringer Bauhöhe eine optimale Verteilung und Wiederverteilung zu erhalten.

Diese Aufgabe wird erfindungsgemäß dadurch gelöst, dass beim Betrieb am oder über dem Flutpunkt mindestens eine Packungsschicht der Kolonne als Verteilerpackungsschicht mit größerer Dichte für einen Anstau und für eine Verteilung der Flüssigkeit eine spezifische Oberfläche aufweist, die um den Faktor 1,5 bis 10, größer ist als die spezifische Oberfläche der darüber und darunter liegenden Verteilerpackungsschicht, um eine größere Trennleistung zu erreichen und dass das Anstauen und Fluten im Bereich der Verteilvorrichtung durch verengte Strömungsquerschnitte erfolgt, die im Vergleich zu den verwendeten Packungen oder Füllkörpern einen erhöhten Strömungswiderstand aufweisen.

Die vorliegende Erfindung stellt ein einfaches Verfahren bereit, mit dem sich der Aufwand für die Verteilung und insbesondere die Wiederverteilung von Flüssigkeit stark vermindert. Es eignet sich für Füllkörper- und Packungskolonnen und damit für den Einsatz in Packungskolonnen. Überraschenderweise läßt sich diese Verteilwirkung erzielen, ohne daß zusätzliche Baugruppen, wie Flüssigkeitssammler, Sammelkanäle, Ablaufrohre und Verteilsysteme benötigt werden. Durch eine erfindungsgemäße Modifizierung und/oder Ergänzung der den Stoffaustausch bewirkenden Einbauten wird die flüssigkeitsverteilende Wirkung erreicht. Die Bereiche der Kolonne, die die Flüssigkeitsverteilung bewirken, nehmen zusätzlich am Stoffaustausch teil. Dies verringert die Bauhöhe der Kolonne. Zudem erlaubt dieser neue Verteilertyp auch die Verteilung von zweiphasigen Flüssigkeitsgemischen ohne das Auftreten eines Phasenzerfalls.

Vorteilhafte Ausgestaltungen der Erfindung sind in den Unteransprüchen aufgeführt.

Abb. 1      eine Wiederverteilung nach dem Stand der Technik,

Abb. 2      eine erfindungsgemäße Ausführung mit einer Verteilerschicht insbesondere einer Verteilerpackungsschicht,

Abb. 3      ein perspektivischer Ausschnitt aus einer Packung mit Kreuzkanalstruktur,

Abb. 4      Form und Montage von Einzelblechen,

Abb. 5      Einzelbleche mit Knickverläufen,

Abb. 6      eine Ausführung mit Auflagering und Auflagerost,

Abb. 7      Verteilerpackungen/-schichten mit erhöhtem Strömungswiderstand und

Abb. 8      zwei direkt übereinander angeordnete Verteilerpackungen/-schichten.

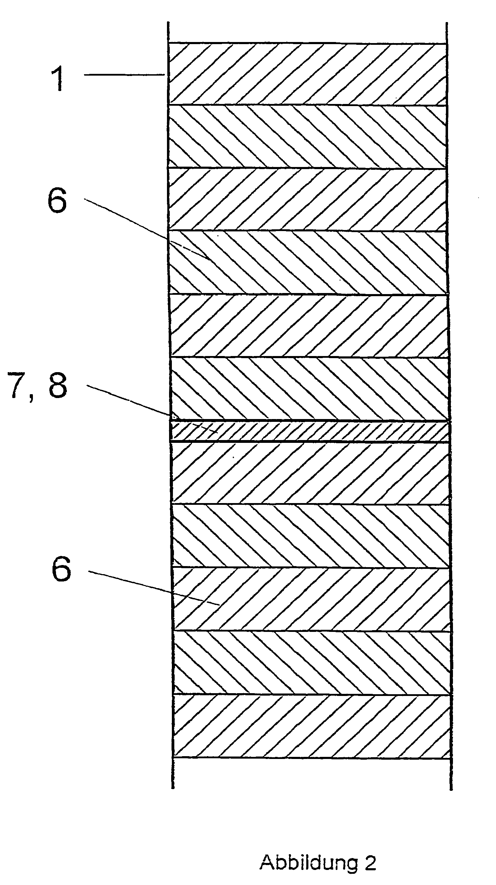

Es wurde gefunden, daß sich die flüssigkeitsverteilende Wirkung durch dünne, etwa 1 bis 20 cm, insbesondere 2 bis 4 cm hohe Packungslagenschichten 7 - im Folgenden als Verteilerpackung 7 bezeichnet - oder Schichten von Füllkörpern - im Folgenden als Verteilerschicht 8 bezeichnet - bewirken läßt, die eine größere volumenbezogene Oberfläche und einen kleineren hydraulischen Durchmesser aufweisen als die übrigen Packungen 6 oder Füllkörper 9 (Abb. 2). Die Verteilerpackungen weisen bevorzugt Perforationen in Form von beispielsweise kreisrunden Löchern auf, wobei der Anteil der Perforationen an der Gesamtfläche etwa 2 bis 80 %, bevorzugt 10 bis 30 %, beträgt. Es ist auch möglich, die Wirkung der Perforationen dadurch zu erzielen, daß als Ausgangsmaterial beispielsweise Streckmetall verwendet wird, wie es bei Packungen der Bauart Montz BSH marktüblich ist. Die volumenspezifische Oberfläche der Packungslagen ist um den Faktor von etwa 1,5 bis 10, bevorzugt um den Faktor von etwa 2 bis 3, größer als die der Destillationspackungen.

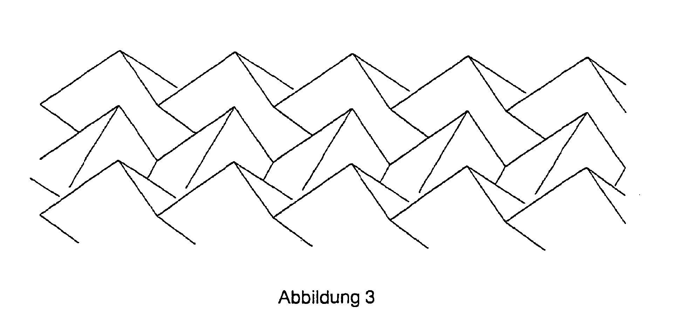

Die Geometrie dieser Verteilerpackungen ist beliebig. Es können grundsätzlich die bei Destillationspackungen üblichen Geometrien eingesetzt werden, beispielsweise die besonders weit verbreiteten Kreuzkanalstrukturen. Abbildung 3 zeigt einen Ausschnitt aus einer solchen Packung mit Kreuzkanalstruktur. Diese Geometrie ist besonders vorteilhaft, da sie auch bei einem hohen Perforationsanteil, wie er für die Verteilerpackungen 7 bevorzugt wird, noch eine hohe mechanische Festigkeit, insbesondere Druckfestigkeit, aufweist. Beispiele für geeignete Packungsgeometrien sind die Bauarten Montz A3 und B1 der Fa. Montz GmbH, D-40705 Hilden, die Bauarten Sulzer BX, CY und Mellapak der Fa. Sulzer Chemtech AG, CH-8404 Winterthur, die Bauart FLEXIPAC der Fa. Koch-Glitsch, Wichita, Kansas 67208 (USA) und die Bauart Intalox der Fa. Norton, Akron, Ohio 44309 (USA). Weitere Beispiele finden sich in WO 93/19335, WO 98/50752, WO 98/55221, EP 190 435 A1, EP 201 614 B1, EP 270 050 A1, EP 401 580 B1, EP 454 179 A1, EP 516 087 B1, CH 547 120, US 3.664.095, US 4.710.326, ebenfalls mit eben und parallel angeordneten Einzelelementen. Möglich ist auch die Verwendung von spiralförmig aufgewickelten und teilweise nicht in Kreuzkanalstruktur sondern parallel zur Kolonnenachse ausgeführten Anordnungen, wie sie beispielsweise in EP 068 862 beschrieben sind. Ebenso können die Verteilerpackungen in Form von Gitterstrukturen, wie beispielsweise in EP 418 338 B1 beschrieben, gefertigt sein. Eine weitere Möglichkeit bieten Geometrien mit rechteckigen Querschnitten, wie sie in Katalysatormonolithen gebräuchlich und beispielsweise in EP 606 964 A1 beschrieben sind. Auch diese sind jeweils parallel zur Kolonnenachse ausgeführt.

Auch bei Verteilerschichten 8 bestehen keine Einschränkungen hinsichtlich der Geometrie der Füllkörper. Entscheidend ist wie bei den Verteilerpackungen hauptsächlich ihre volumenspezifische Oberfläche.

Die flüssigkeitsverteilende Wirkung dieser Verteilerpackungen und Verteilerschichten beruht auf einem Anstauen oder bevorzugt Fluten von Flüssigkeit. Während die übrigen Kolonnenpackungen oder Füllkörper noch im Bereich einer Filmströmung betrieben werden, bildet sich wegen des kleineren hydraulischen Durchmessers der dünnen Verteilerpackungen 7 und Verteilerschichten 8 bei gefluteter Fahrweise ein Flutzustand aus. Die Flüssigkeit kann sich wegen der Perforationen in den Verteilerpackungen 7 und in den Verteilerschichten 8 ähnlich dem Prinzip kommunizierender Röhren über den Kolonnenquerschnitt ausbreiten und am unteren Ende vergleichmäßigt nach unten abfließen.

Die beste Verteilwirkung wird erzielt, wenn die Verteilerpackungen 7 und Verteilerschichten 8 im Flutzustand betrieben werden. Der hierdurch bedingte Druckverlust von etwa 1 bis 5 mbar je Flüssigkeitsverteiler schränkt jedoch die Einstellung des Flutzustands auf Anwendungen bei Normaldruck, Überdruck oder mäßigem Vakuum oberhalb von etwa 20 mbar Betriebsdruck ein. Überraschenderweise zeigte sich jedoch in Versuchen, daß eine zwar geringere, für die technische Anwendung insbesondere bei Zwischenverteilern jedoch ausreichende Verteilwirkung auch schon im Anstaubereich erzielt wird. In diesem Bereich ist der Druckverlust mit etwa 0,2 bis 1 mbar je Verteiler wesentlich niedriger und eröffnet somit Anwendungsmöglichkeiten auch bei niedrigen Betriebsdrücken.

Während konventionelle Flüssigkeitssammler und Wiederverteiler keinen unmittelbaren Beitrag zum Stoffaustausch leisten, wird durch die anstauende Wirkung der Verteilerpackungen 7 und Verteilerschichten 8 zusätzlich die Trennleistung gesteigert. In einer 1999 am Institut für Thermische Verfahrenstechnik der Universität Karlsruhe von B. Kaibel angefertigten Diplomarbeit "Untersuchung zur Verbesserung von Durchsatz und Trennleistung von Destillationspackungen" wurden Kombinationen von abwechselnd dünnen Packungslagen mit kleinem hydraulischen Durchmesser und üblichen Packungslagen untersucht. Es wurde gefunden, daß durch das Anstauen der Flüssigkeit in den dünnen Packungslagen die auf die Höhe bezogene Trennleistung um bis zu 50 % steigt. In dieser Arbeit finden sich jedoch keine Angaben zu einer flüssigkeitsverteilenden Wirkung der dünnen Packungslagen.

Packungsanordnungen mit höhenveränderlicher Geometrie wurden bereits mehrfach, jedoch mit anderer Zielsetzung beschrieben. Hinweise auf eine flüssigkeitsverteilende Wirkung finden sich nicht. Das Ziel bei der Verwendung von Packungen mit höhenveränderlicher Geometrie ist im Gegenteil das Vermeiden von Flutzuständen speziell im unteren Bereich der Packungslagen. Dies soll höhere Durchsätze von Gas und Flüssigkeit ermöglichen.

In EP 858 830 A1 versucht man, den Abstand benachbarter Packungselemente am unteren Rand der Packungslagen zu erhöhen, indem man dort die Knickhöhe verringert. Als weitere Möglichkeit ist beschrieben, einen Teil des Materials am unteren Ende der Packungslagen, beispielsweise bei jedem zweiten Packungselement, teilweise oder ganz zu entfernen. Diese Maßnahmen dienen dazu, ein Anstauen von Flüssigkeit am unteren Ende der Packungslagen zu verhindern. Eine flüssigkeitsverteilende Wirkung tritt nicht ein.

In WO 97/16247 ist eine Maßnahme geschildert, bei der die Geometrie der Kreuzkanalstruktur verändert wird. Die Knicke sind nicht mehr, wie üblich gerade, sondern S-förmig gestaltet und werden so angeordnet, daß die Knickrichtung am unteren und oberen Ende der Packungslagen annähernd vertikal verläuft. Auch diese Maßnahme soll ein Anstauen der Flüssigkeit verhindern und führt zu keiner flüssigkeitsverteilenden Wirkung.

DE 3 918 483 C2 beschreibt eine Packung mit höhenveränderlicher Geometrie, bei der die Knicke der Kreuzkanalstruktur am unteren Ende vertikal verlaufen. Auch hier soll ein Anstauen von Flüssigkeit verhindert werden. Es stellt sich keine flüssigkeitsverteilende Wirkung ein.

In DE 2 921 270 C2 wird eine Packung mit Kreuzkanalstruktur beschrieben, bei der die Knicke einen bogenförmigen Verlauf aufweisen. Es kann kein gezielter Flutzustand mit flüssigkeitsverteilender Wirkung eingestellt werden.

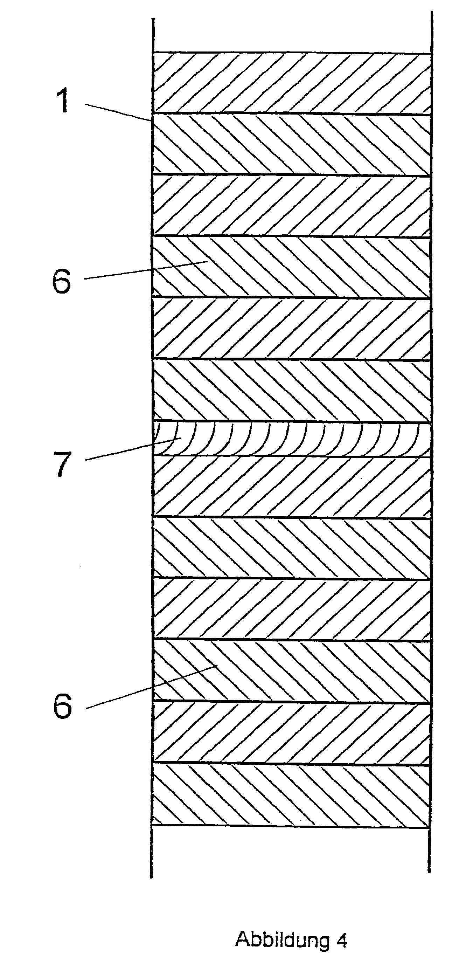

Der gewünschte Flutzustand im unteren Teilbereich der Verteilerpackung 7 läßt sich jedoch bei einer Neuanordnung der einzelnen Blechelemente, wie sie in DE 2 921 270 C2 grundsätzlich beschrieben sind, erzielen. Die Einzelbleche werden wie in Abbildung 4 gezeigt so montiert, daß der größte Strömungswiderstand jeweils am unteren Ende auftritt. Zusätzlich werden die Einzelbleche zumindest in dem Teilbereich mit dem größeren Strömungswiderstand perforiert, um die Flüssigkeitsquerverteilung im gefluteten Zustand zu unterstützen. Bevorzugt werden die Verteilerpackungen 7 auch in dem Teilbereich ohne größeren Strömungswiderstand perforiert. Der Anteil der Perforationen an der Gesamtfläche soll in diesem Bereich etwa 2 bis 80%, bevorzugt 10 bis 30% betragen. Damit wird die Flüssigkeitsquerverteilung weiter unterstützt, da dann der gesamte Bereich der Verteilerpackung 7, in dem sich ein Sprudelzustand ausbildet, einen Flüssigkeitsqueraustausch ermöglicht.

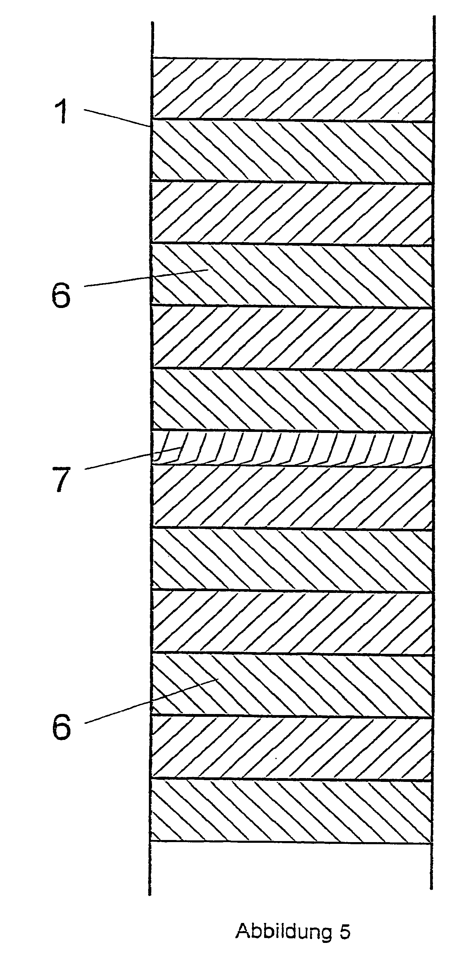

Alternativ zu den stetig gekrümmten Knickverläufen ist auch eine Geometrie möglich, bei der der Knickverlauf am unteren Ende der Verteilerpackung 7 stärker gegen die Horizontale geneigt ist als an ihrem oberen Ende (Abb. 5). Auch in diesem Fall werden die Verteilerpackungen 7 bevorzugt mit Perforationen ausgestattet, wie bei den Verteilerpackungen mit bogenförmigem Knickverlauf.

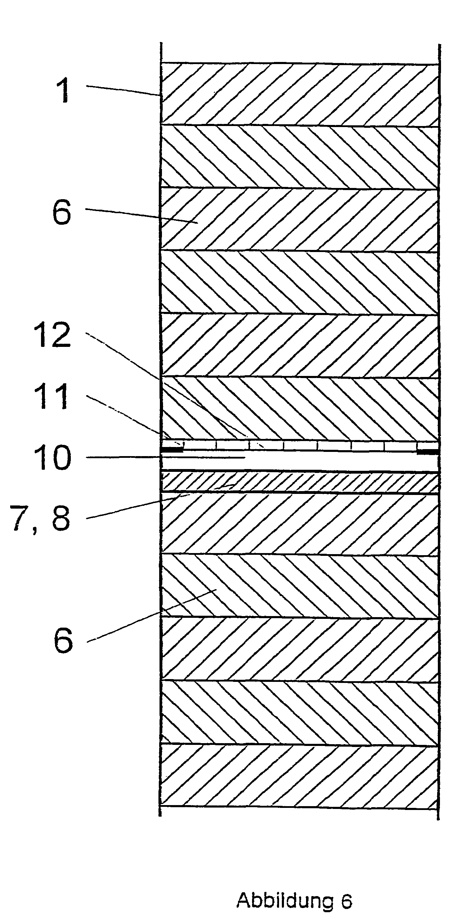

Es ist alternativ auch möglich, die dünnen Verteilerpackungen 7 oder Verteilerschichten 8 allein zu verwenden und oberhalb einen Freiraum 10 zu schaffen, in dem sich ein Queraustausch der Flüssigkeit einstellen kann. Die sprudelnde Flüssigkeit kann sich oberhalb der dünnen Verteilerpackungen 7 oder Verteilerschichten 8 frei verteilen. Abbildung 6 zeigt eine Möglichkeit für eine konstruktive Ausführung mit einem Auflagering 11 und einem Auflagerost 12. Es können jedoch auch beliebige andere konstruktive Ausführungen von Abstandshaltern eingesetzt werden, die einen Queraustausch der Flüssigkeit ermöglichen.

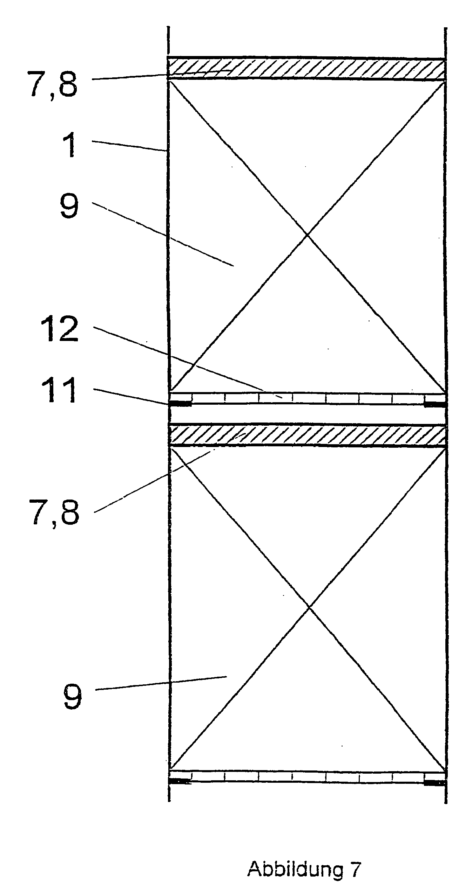

Anstelle der bevorzugten dünnen Verteilerpackungen 7 oder Verteilerschichten 8 können grundsätzlich auch andere Vorrichtungen eingesetzt werden, die im Vergleich zu den verwendeten Packungen einen erhöhten Strömungswiderstand aufweisen und einen Sprudelzustand auslösen (Abb. 7). Es ist beispielsweise möglich, eine oder bevorzugt mehrere Lagen von Drahtnetzen oder Drahtgestricken oder gewickelte Packungen zu benutzen. Eine weitere Möglichkeit besteht darin, Lochböden oder offenporige Schaumstrukturen wie zum Beispiel Monolithe einzusetzen. Diese Maßnahmen lassen sich auch beliebig kombinieren, indem beispielsweise Anordnungen von Drahtgestricken oder Füllkörpern bzw. Schaumstrukturen auf Lochböden verwendet werden. Allerdings erweist sich der mögliche Betriebsbereich hinsichtlich des Durchsatzes von Gas und Flüssigkeit als eng.

Bei der experimentellen Überprüfung zeigte es sich, daß die geordneten Packungen mit verengtem Querschnitt als Verteilerpackungen 7 einen besonders weiten und stabilen Betriebsbereich aufweisen. Dies rechtfertigt ihre aufwendigere konstruktive Ausführung mit den höheren Fertigungskosten. Wenn der Betriebsbereich nicht stark hinsichtlich des Durchsatzes variiert, können jedoch auch auf das jeweilige Trennproblem angepaßte Lösungen, wie beispielsweise Drahtnetze eingesetzt werden. Um einen zuverlässigen Betrieb auch bei schwankenden Belastungszuständen zu erreichen, wird jedoch der Einsatz von geordneten Packungen mit verengtem Querschnitt empfohlen.

Die Verteilerpackungen 7 und die Verteilerschichten 8 mit kleinerem hydraulischen Durchmesser oder die modifizierten Verteilerpackungen, die nur an ihrem unteren Ende ein Anstauen auslösen, können nicht nur bei Packungskolonnen, sondern auch bei Füllkörperkolonnen in der Funktion von Flüssigkeitsverteilern eingesetzt werden. Es ist hier jedoch erforderlich, diese Packungslagen exakt horizontal einzubauen. Dies läßt sich am besten durch einen Auflagering 11 gewährleisten, wie er bei Bodenkolonnen zur Auflage der Böden üblich ist, in Verbindung mit einem Auflagerost 12.

Die Höhe der Verteilerpackungen 7 oder Verteilerschichten 8 soll auch bei kleinen Kolonnendurchmessern von weniger als 0,8 m bevorzugt mindestens 0,02 m, besser 0,03 bis 0,05 m, betragen. Bei größeren Kolonnendurchmessern sollen diese Werte erhöht werden. Es wird empfohlen, die Höhe H der Verteilerpackungen oder Verteilerschichten bevorzugt nach der Beziehung

$$H = 0{,}02\ m + 0{,}01 * D$$

zu wählen, worin D den Durchmesser der Kolonne bedeutet. Bei hohen Ansprüchen an die Verteilgüte wird empfohlen, diese Werte zu verdoppeln.

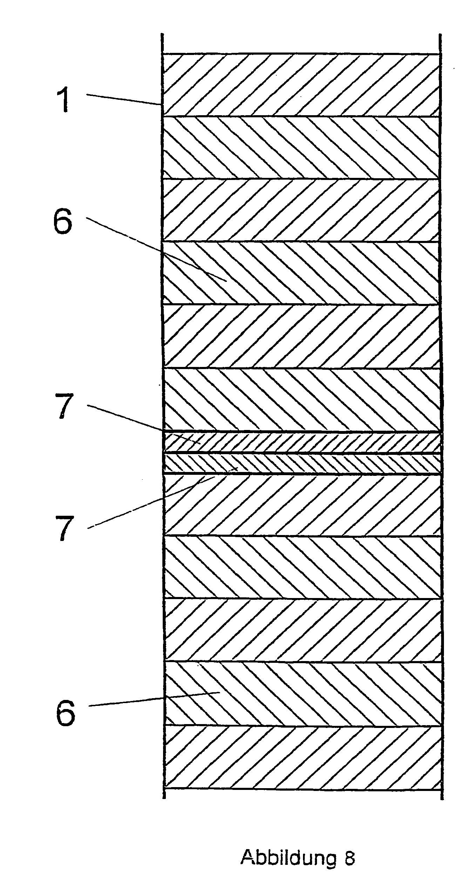

Es ist auch möglich, zwei oder mehrere Verteilerpackungen 7 direkt übereinander anzuordnen, um die Verteilgüte zu verbessern (Abb. 8).

Zur Wahl der Größe der Verteilerpackungen 7 oder Verteilerschichten 8 kann man auf die übliche Fachliteratur, speziell auch Firmenunterlagen zurückgreifen, vergleichbar der Auswahl der Stoffaustauschpackungen 6 oder der Füllkörperschüttung 9. Wenn die Verteilerpackungen 7 und die Verteilerschichten 8 im Flutzustand betrieben werden sollen, gilt als grobe Regel, daß die volumenbezogene Oberfläche der Verteilerpackungen und Verteilerschichten etwa doppelt so groß gewählt werden soll wie die Stoffaustauschpackungen 6 und die Füllkörperschüttung 9. Dies beruht auf der Regel, daß die Trenneinbauten üblicherveise auf etwa 70 bis 80 % der Flutbelastung ausgelegt werden. Da der Gasbelastungsfaktor oder F-Faktor - ausgedrückt in der Form Gasgeschwindigkeit x Gasdichte$^{0,5}$ - am Flutpunkt proportional zum hydraulischen Durchmesser$^{0,5}$ ist, folgt unmittelbar, daß bei einer Verdoppelung der spezifischen Oberfläche der Flutzustand erreicht wird. Der hydraulische Durchmesser von Packungen und Füllkörpern wird dabei zu 4/spezifische Oberfläche gesetzt. So ergibt sich beispielsweise für eine Destillationspackung 6 mit einer spezifischen Oberfläche von 250 $m^2/m^3$ eine geeignete Verteilerpackung 7 mit 500 $m^2/m^3$.

Der Knickwinkel, den die Knicke bei den Verteilerpackungen 7 bilden, kann wie bei den gängigen Destillationspackungen in Kreuzkanalstruktur etwa 60° bis 90° betragen. Es können jedoch auch größere oder kleinere Winkel realisiert werden.

Um ein unnötiges Ablösen von feinen Tröpfchen zu vermeiden, werden die Knicke bevorzugt nicht scharfkantig ausgeführt, sondern gerundet, wobei der Biegeradius etwa 10 bis 20 % der Knickbreite beträgt.

Die Neigung der Knicke gegen die Horizontale kann etwa 30° bis 60° betragen. Werte von 45° werden bevorzugt.

Benachbarte Packungslagen 6 und Verteilerpackungen 7 werden zueinander bevorzugt um jeweils 90° verdreht angeordnet.

Bei dem Einbau der Packungslagen werden die Lagen bevorzugt zusätzlich dynamisch (beispielsweise durch Klopfen) oder statisch (beispielsweise durch das Auflegen von Gewichten) so beschwert, daß sich die Zahl der Kontaktstellen vergrößert. Die Stärke dieser Maßnahmen richtet sich nach dem verwendeten Packungsmaterial und ist dem Fachmann bekannt.

Die Verteilerpackungen und Verteilerschichten können gegebenenfalls mit konventionellen Vorverteilern einfacher Bauart kombiniert werden. Hier bewirken die Vorverteiler, beispielsweise Düsen, eine großräumige Grobaufteilung der Flüssigkeit. In den darunter befindlichen Verteilerpackungen oder Verteilerschichten wird die Feinverteilung vorgenommen.

Die Erfindung umfaßt ferner ein Verfahren zum Betreiben einer mit Verteilerpackungen 7 oder Verteilerschichten 8 ausgerüsteten Kolonne, bei der die Gasbelastung, die Flüssigkeitsbelastung oder die Gasbelastung und die Flüssigkeitsbelastung gemeinsam so eingestellt werden, daß sich in den Verteilerpackungen 7 und den Verteilerschichten 8 ein Flutzustand einstellt oder bei Anwendungen mit niedrigem Druckverlust zumindest ein Anstauen von Flüssigkeit eintritt. In einem weiteren Verfahren werden zweiphasige Flüssigkeitsgemische ohne vorgeschaltete Phasentrennung verteilt.

## Patentansprüche

1. Verfahren zur Flüssigkeitsverteilung mit Packungs- und/oder Füllkörperkolonnen, die einzeln horizontale, am Wärme- und/oder Stoffaustausch beteiligte Packungsschichten aufweisen,
**dadurch gekennzeichnet, dass** beim Betrieb am oder über dem Flutpunkt mindestens eine Packungsschicht (7, 8) der Kolonne als Verteilerpackungsschicht mit größerer Dichte für einen Anstau und für eine Verteilung der Flüssigkeit eine spezifische Oberfläche aufweist, die um den Faktor 1,5 bis 10, größer ist als die spezifische Oberfläche der darüber und darunter liegenden Verteilerpakkungsschicht, um eine größere Trennleistung zu erreichen und dass das Anstauen und Fluten im Bereich der Verteilvorrichtung durch verengte Strömungsquerschnitte erfolgt, die im Vergleich zu den verwendeten Packungen oder Füllkörpern einen erhöhten Strömungswiderstand aufweisen.

2. Verfahren nach Anspruch 1, **dadurch gekennzeichnet, dass** die spezifische Oberfläche um den Faktor 2 bis 3 größer ist als die spezifische Oberfläche der darüber und darunter liegenden Verteilerpackungsschicht.

3. Verfahren nach Anspruch 1 oder 2, **dadurch gekennzeichnet, dass** die Höhe der Verteilerpackungsschicht (7, 8) 0,02 bis 0,04 m, beträgt.

4. Verfahren nach einem der vorherigen Ansprüche, **dadurch gekennzeichnet, dass** die Verteilerpackungsschicht (7, 8) Perforationen in Form von Löchern aufweist, wobei der Anteil der Perforationen an der Gesamtfläche 10 bis 30%, beträgt.

5. Verfahren nach Anspruch 4, **dadurch gekennzeichnet, dass** der Flächenanteil der Perforationen der Verteilerpackungsschicht (7, 8) über die Packungshöhe unterschiedlich ist und der Flächenanteil der Perforationen vom unteren zum oberen Packungsrand hin abnimmt.

6. Verfahren nach einem der vorherigen Ansprüche, **dadurch gekennzeichnet, dass** die Verteilerschicht in Kreuzkanalstruktur ausgeführt ist, bestehend aus einer Vielzahl mit ihren Seitenflächen aneinandertiegenden. Bändern, die mit quer zur Längsrichtung liegenden Rippen versehen sind, wobei die Bänder so angeordnet sind, dass die Rippen einander berührender Bänder einander kreuzen und mit einer Höhe von 0,01 bis 0,2 m ausgeführt sind.

7. Verfahren nach einem der vorherigen Ansprüche, **dadurch gekennzeichnet, dass** oberhalb der Verteilerschicht durch Abstandselemente ein etwa 0,01 bis 0,2 m hoher Freiraum besteht, in dem sich ein Queraustausch der Flüssigkeit einstellt.

8.  Verfahren nach einem der vorherigen Ansprüche, **dadurch gekennzeichnet, dass** die Rippen einander berührender Bänder einander kreuzen und in Bögen verlaufen, die parallel zueinander liegen, wobei die Bögen einen kreisbogenförmigen Verlauf aufweisen und die Rippen am unteren Rand der Packung einen Winkel von 10° bis 40° gegen die Horizontale aufweisen und am oberen Rand einen Winkel von 50° bis 65° aufweisen und diese Neigung entweder in die gleiche oder die entgegengesetzte Richtung wie am oberen Ende der Packung weist und die Höhe der Packungslage 0,05 bis 0,5 m beträgt.

9.  Verfahren nach Anspruch 8, **dadurch gekennzeichnet, dass** der kreisbogenförmige Verlauf durch mehrere Geradenstücke, angenähert ist und der Verlauf am unteren Ende der Packungslage schwächer gegen die Horizontale geneigt ist als am oberen Ende der Pakkungslage.

10. Verfahren nach einem der Ansprüche 7 bis 9, **dadurch gekennzeichnet, dass** der Knickwinkel, den die Knicke bei Packungen mit verengtem Querschnitt bilden, etwa 60° bis 90° betragen und die Knicke gerundet ausgeführt sind, wobei der Biegeradius etwa 10 bis 20% der Knickbreite beträgt.

11. Verfahren nach einem der vorherigen Ansprüche, **dadurch gekennzeichnet, dass** statt oder zusätzlich zu den Lochböden eine oder mehrere Lagen von Drahtnetzen oder Drahtgestricken, aus Blech- oder Gewebebahnen gewickelte Packungen, offenporige Schaumstrukturen wie zum Beispiel Monolithe benutzt werden.

12. Verfahren zum Betreiben eines mit Verteilerpackungen oder Verteilerschichten ausgerüsteten Kontaktapparates nach einem der vorherigen Ansprüche, **dadurch gekennzeichnet, dass** die Gasbelastung, die Flüssigkeitsbelastung oder die Gasbelastung und die Flüssigkeitsbelastung gemeinsam so eingestellt sind, dass sich in den Verteilerpackungen und den Verteilerschichten ein Flutzustand einstellt oder bei Anwendungen mit niedrigem Druckverlust zumindest ein Anstauen von Flüssigkeit eintritt.

13. Verfahren nach Anspruch 12, **dadurch gekennzeichnet, dass** ein zweiphasiges Flüssigkeitsgemisch verteilt wird und die Flüssigkeitsverteilung ohne vorgeschaltete Phasentrennung in einem Trenngefäß durchgeführt wird.

14. Verfahren nach Anspruch 12 oder 13, zum Betreiben eines Festbettreaktors mit Gegenstrom von Gas und Flüssigkeit, **dadurch gekennzeichnet, dass** zum Verteilen der Flüssigkeit am oberen Ende der Katalysatorschüttung Verteilerpackungen oder Verteilerschichten eingesetzt sind, wobei deren hydraulische Durchmesser so gewählt ist, dass im gewählten Betriebszustand der Flutzustand in den Verteilerpackungen oder Verteilerschichten eintritt.

15. Verfahren nach Anspruch 14, **dadurch gekennzeichnet, dass** die Verteilerpackungen oder Verteilerschichten innerhalb der Katalysatorschüttung angeordnet sind.

**Claims**

1.  Method of liquid distribution in packed and/or filled columns which have individual horizontal packing layers involved in heat and/or substance exchange, **characterized in that** during operation at or above the flooding point, at least one packing layer (7, 8) of the column [serving] as a higher-density distributor packing layer for damming and distributing liquid has a specific surface area that is greater by a factor of 1.5 to 10 than the specific surface area of the distributor packing layers above and below it with a view to achieving higher separation performance, and **in that** damming and flooding in the region of the distribution device is effected through constricted flow cross-sections that have a higher flow resistance than the packings or fillers used.

2.  Method according to Claim 1, **characterized in that** the specific surface area is greater by a factor of 2 to 3 than the specific surface area of the distributor packing layers above and below.

3.  Method according to Claim 1 or Claim 2, **characterized in that** the height of the distributor packing layer (7, 8) is 0.02 to 0.04 m.

4.  Method according to any one of the preceding claims, **characterized in that** the distributor packing layer (7, 8) has perforations in the form of holes, the proportion of perforations to the total surface area being 10 to 30 %.

5.  Method according to Claim 4, **characterized in that** the proportion of perforations to the area of the distributor packing layer (7, 8) varies over the height of the packing, decreasing from the bottom to the top of the packing.

6.  Method according to any one of the preceding claims, **characterized in that** the distributor layer is realized with a criss-cross channel structure consisting of a plurality of strips with their lateral surfaces touching each other and provided with ribs at right angles to the longitudinal direction, the strips being arranged with the ribs of touching strips criss-crossed and realized with a height of 0.01 to 0.2 m.

7. Method according to any one of the preceding claims, **characterized in that** above the distributor layer, spacer elements create a free space approximately 0.01 to 0.2 m high within which a transverse exchange of liquid is established.

8. Method according to any one of the preceding claims, **characterized in that** the ribs of touching strips criss-cross and extend in parallel curves in the form of circular arcs, and the ribs are set at an angle of 10° to 40° to the horizontal at the lower edge of the packing and of 50° to 65° at the upper edge, and this inclination points in either the same direction as at the top of the packing or the opposite direction, and the height of the packing layer is 0.05 to 0.5 m.

9. Method according to Claim 8, **characterized in that** the circular-arc profiles are approximated by a plurality of straight pieces and the profile is less steeply inclined to the horizontal at the lower end of the packing layer than at the upper end.

10. Method according to any one of Claims 7 to 9, **characterized in that** the kink angle formed by the kinks in packings with a constricted cross-section [is] approximately 60° to 90° and the kinks are rounded, the bend radius being approximately 10 to 20 % of the kink width.

11. Method according to any one of the preceding claims, **characterized in that** one or more layers of wire netting or wire mesh, packings wound from sheet-metal or fabric webs, [or] porous foam structures such as monoliths for example, are used instead of, or in addition to, the perforated trays.

12. Method of operating a contact apparatus fitted with distributor packings or distributor layers according to any one of the preceding claims, **characterized in that** the gas loading or liquid loading, or the gas and liquid loading combined, are set so that a flooded state is established in the distributor packings and distributor layers, or, in the case of applications with low pressure loss, at least damming of liquid occurs.

13. Method according to Claim 12, **characterized in that** a two-phase liquid mixture is distributed, and the liquid distribution is carried out in a separator vessel without prior separation of the phases.

14. Method according to Claim 12 or Claim 13 for operating a fixed-bed reactor with gas and liquid contraflow, **characterized in that** distribution of liquid at the top of the catalyst charge is effected by means of distributor packings or distributor layers whose hydraulic diameter is selected so that in the selected operating condition a flooded state occurs in the distributor packings or distributor layers.

15. Method according to Claim 14, **characterized in that** the distributor packings or distributor layers are arranged within the catalyst charge.

**Revendications**

1. Procédé destiné à la distribution de liquide avec des colonnes à garnissage et/ou à corps de remplissage, qui présentent des couches de garnissage horizontales individuelles, participant à l'échange de chaleur et/ou de matière, **caractérisé en ce que**, lors du fonctionnement au ou au-dessus du point de noyage, au moins une couche de garnissage (7, 8) de la colonne, en tant que couche de garnissage distributrice de masse volumique plus élevée pour une retenue et pour une distribution du liquide, présente une surface spécifique plus grande du facteur 1,5 à 10 que la surface spécifique de la couche de garnissage distributrice sus-jacente et sous-jacente, pour obtenir une puissance de séparation plus élevée, et que la retenue et le noyage dans la zone du dispositif distributeur s'effectuent par des sections transversales d'écoulement rétrécies, qui présentent une résistance à l'écoulement accrue par rapport aux garnissages ou corps de remplissage utilisés.

2. Procédé suivant la revendication 1, **caractérisé en ce que** la surface spécifique est plus grande du facteur 2 à 3 que la surface spécifique de la couche de garnissage distributrice sus-jacente et sous-jacente.

3. Procédé suivant l'une des revendications 1 et 2, **caractérisé en ce que** la hauteur de la couche de garnissage distributrice (7, 8) est de 0,02 à 0,04 m.

4. Procédé suivant l'une des revendications précédentes, **caractérisé en ce que** la couche de garnissage distributrice (7, 8) présente des perforations en forme de trous, la proportion de perforations dans la surface totale étant de 10 à 30%.

5. Procédé suivant la revendication 4, **caractérisé en ce que** le pourcentage superficiel des perforations de la couche de garnissage distributrice (7, 8) est différent sur la hauteur du garnissage et le pourcentage superficiel des perforations diminue du bord inférieur en direction du bord supérieur du garnissage.

6. Procédé suivant l'une des revendications précédentes, **caractérisé en ce que** la couche distributrice a une réalisation en structure de canaux croisés, constituée d'une multiplicité de bandes juxtaposées par leurs surfaces latérales et munies de nervures transversales à la direction longitudinale, les bandes étant disposées de sorte que les nervures de bandes, en contact mutuel, se croisent les unes les autres et sont réalisées avec une hauteur de 0,01 à 0,2 m.

7. Procédé suivant l'une des revendications précédentes, **caractérisé en ce qu'**un dégagement d'environ 0,01 à 0,2 m de haut existe par des éléments d'écartement au-dessus de la couche distributrice, dégagement dans lequel se règle un échange transversal du liquide.

8. Procédé suivant l'une des revendications précédentes, **caractérisé en ce que** les nervures de bandes en contact mutuel se croisent les unes les autres et s'étendent en arcs parallèles entre eux, les arcs présentant une allure en forme d'arc de cercle et les nervures présentant sur le bord inférieur du garnissage un angle de 10° à 40° par rapport à l'horizontale et sur le bord supérieur un angle de 50° à 65°, et cette inclinaison étant orientée, soit dans la même direction, soit dans la direction opposée, qu'à l'extrémité supérieure du garnissage et la hauteur de la couche de garnissage étant de 0,05 à 0,5 m.

9. Procédé suivant la revendication 8, **caractérisé en ce que** l'allure en arc de cercle est approchée par plusieurs pièces rectilignes et l'allure à l'extrémité inférieure de la couche de garnissage a une inclinaison plus faible par rapport à l'horizontale qu'à l'extrémité supérieure de la couche de garnissage.

10. Procédé suivant l'une des revendications 7 à 9, **caractérisé en ce que** l'angle de pliage, que forment les coudes pour des garnissages de section transversale rétrécie, est d'environ 60° à 90°, et les coudes ont une réalisation arrondie, le rayon de courbure représentant environ 10 à 20% de la largeur des coudes.

11. Procédé suivant l'une des revendications précédentes, **caractérisé en ce que** sont utilisées, au lieu ou en supplément de fonds perforés, une ou plusieurs couches de treillis en fil métallique ou tricots métalliques, de garnissages enroulés de bandes de tôle ou nappes de tissu, de structures de mousse à pores ouverts, telles que par exemple monolithes.

12. Procédé d'exploitation d'un appareil de contact équipé de garnissages distributeurs ou de couches distributrices suivant l'une des revendications précédentes, **caractérisé en ce que** la charge de gaz, la charge de liquide ou la charge de gaz et la charge de liquide sont réglées conjointement de sorte qu'un état de noyage se règle dans les garnissages distributeurs et dans les couches distributrices ou au moins une retenue de liquide se produit dans des applications à basse perte de charge.

13. Procédé suivant la revendication 12, **caractérisé en ce qu'**est distribué un mélange de liquide à deux phases et la distribution de liquide est réalisée sans séparation de phases amont dans un vase séparateur.

14. Procédé suivant l'une des revendications 12 et 13 pour l'exploitation d'un réacteur à lit fixe à contre-courant de gaz et de liquide, **caractérisé en ce que** des garnissages distributeurs ou couches distributrices sont utilisés pour la distribution du liquide à l'extrémité supérieur du vrac de catalyseurs, garnissages ou couches dont le diamètre hydraulique est choisi de sorte que l'état de noyage dans les garnissages distributeurs ou couches distributrices se produit dans l'état de fonctionnement choisi.

15. Procédé suivant la revendication 14, **caractérisé en ce que** les garnissages distributeurs ou couches distributrices sont disposés à l'intérieur du vrac de catalyseurs.

Abbildung 1

1

6

7, 8

6

Abbildung 2

Abbildung 3

1

6

7

6

Abbildung 4

Abbildung 5

1

6

12

11

10

7, 8

6

Abbildung 6

Abbildung 7

Abbildung 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3099697 A
- EP 374443 B1
- EP 462048 B1
- EP 462049 B1
- EP 434510 B1
- DE 19615645 A1
- US 4476069 A
- US 5501079 A
- US 5192465 A
- US 5518667 A
- EP 512277 B1
- US 4432913 A
- US 4776989 A
- US 4569364 A
- US 5776316 A
- US 5387377 A
- US 5695548 A
- WO 9319335 A
- WO 9850752 A
- WO 9855221 A
- EP 190435 A1
- EP 201614 B1
- EP 270050 A1
- EP 401580 B1
- EP 454179 A1
- EP 516087 B1
- CH 547120
- US 3664095 A
- US 4710326 A
- EP 068862 A
- EP 418338 B1
- EP 606964 A1
- EP 858830 A1
- WO 9716247 A
- DE 3918483 C2
- DE 2921270 C2

### In der Beschreibung aufgeführte Nicht-Patentliteratur

- **K. SATTLER.** Thermische Trennverfahren. VCH Verlagsgesellschaft mbH, 1988, 226-231